# EUROPEAN PATENT SPECIFICATION

(11) **EP 2 880 101 B1**
(45) Date of publication and mention of the grant of the patent: **21.12.2016**
(21) Application number: 13773400.0
(22) Date of filing: 29.07.2013
(51) Int. Cl.: C09C 1/02, C01F 11/02, C04B 2/02, C04B 2/06, B82Y 30/00

(54) **A PROCESS FOR THE SYNTHESIS OF CA (OH) 2 NANOPARTICLES BY MEANS OF IONIC EXCHANGE RESINS**
VERFAHREN ZUR SYNTHESE VON CA(OH)2-NANOPARTIKELN MITTELS IONENAUSTAUSCHERHARZEN
PROCÉDÉ POUR LA SYNTHÈSE DE NANOPARTICULES DE CA(OH)2 AU MOYEN DE RÉSINES ÉCHANGEUSES D'IONS

(30) Priority: 30.07.2012 IT RM20120370
(43) Date of publication of application: 10.06.2015
(73) Proprietor: Universita' Degli Studi Dell'Aquila, 67100 Coppito L'Aquila (IT)
(72) Inventor: VOLPE, Roberto, I-67100 L'aquila (IT); TAGLIERI, Giuliana, I-67100 L'aquila (IT); DANIELE, Valeria, I-67100 L'aquila (IT); DEL RE, Giovanni, I-67100 L'aquila (IT)
(74) Representative: Germinario, Claudio
(86) International application number: PCT/IB2013/056195
(87) International publication number: WO 2014/020515

(56) References cited:
- GB-A- 1 017 341
- VALERIA DANIELE ET AL: "Synthesis of Ca(OH)2 nanoparticles with the addition of Triton X-100. Protective treatments on natural stones: Preliminary results", JOURNAL OF CULTURAL HERITAGE, vol. 13, no. 1, 1 January 2012 (2012-01-01), pages 40-46, XP055062000, ISSN: 1296-2074, DOI: 10.1016/j.culher.2011.05.007
- BARBARA SALVADORI ET AL: "Synthesis of Ca(OH) 2 Nanoparticles from Diols", LANGMUIR, vol. 17, no. 8, 1 April 2001 (2001-04-01), pages 2371-2374, XP055061903, ISSN: 0743-7463, DOI: 10.1021/la0015967
- A. ROY, J. BHATTACHARYA: "Synthesis of Ca(OH)2 nanoparticles by wet chemical method", MICRO AND NANO LETTERS, vol. 5, no. 2, 2010, pages 131-134, XP002696633,
- LIU T ET AL: "Synthesis and characterization of calcium hydroxide nanoparticles by hydrogen plasma-metal reaction method", MATERIALS LETTERS, NORTH HOLLAND PUBLISHING COMPANY. AMSTERDAM, NL, vol. 64, no. 23, 15 December 2010 (2010-12-15), pages 2575-2577, XP027356320, ISSN: 0167-577X [retrieved on 2010-08-24]

## Description

The present invention relates to a process for the synthesis of Ca(OH)₂ nanoparticles by means of ionic exchange resins.

### State of art

In the preservation and consolidation of the calcareous architectural surfaces the use of products compatible with the original base materials is requested: calcium hydroxide (Ca(OH)₂) is the best candidate among the consolidating and protective products thanks to the fact of being perfectly eco-compatible with the treated calcareous substrates, after transformation of Ca(OH)₂ in CaCO₃ [1,2]. However, the preservative treatments based upon commercial lime are characterized by a series of limitations: the incompleteness in the carbonation process, the obtainable poor penetration deep, the excessive water quantity supplied to the stones and the chromatic alteration of the surfaces [3-5]. In order to obviate such drawbacks, starting as from the first years of 2000, in the field of the preservation of the Cultural Goods, Ca(OH)₂ nanoparticles with nanometric sizes (*nanolime*) have been introduced, used successfully in protective or consolidating treatments of calcareous architectural surfaces (fillers, plasters, frescos, wall paintings, tombstone materials, etc.) as well as in the field of deacidification of paper and wood. By working with particles with nanometric sizes it is possible reaching a greater penetration depth of treatment and a greater lime-carbonate conversion. The nanometric sizes of the lime particles, in fact, determine a greater surface/volume ratio, thus guaranteeing a greater interaction with CO₂ and, consequently, an improvement in the carbonation process (they are more reactive) [6-11].

The lime nanoparticles are typically obtained by chemical precipitation by adding dropwise (at a speed of about 5ml/min) an aqueous solution of sodium hydroxide (NaOH) to a solution of calcium chloride (CaCl₂), the latter kept at high temperature (90°C or 150°C, depending upon the fact if CaCl₂ is dissolved in water or in diols) [12-13]. At the end of the synthesis, after about 24 hours needed to allow the complete sedimentation of the solid phase, two distinct phases are observed: a limpid surfactant solution and a precipitate with white colour. The produced suspension is then subjected to a series of washings [12] with deionized water, in order to remove the sodium chloride (NaCl) which has formed after the synthesis process, by inevitably involving a loss in nanolime and a lengthening of the production times. The obtained suspension is then dispersed in alcoholic means (2-propanol) for the following reasons: i) the alcoholic suspension is much stabler than the aqueous suspension (it has a lower sedimentation speed) and this involves advantages from the application point of view as the risk of forming white glazes on the surface of the treated material is reduced [14]; ii) the alcohol has disagglomerating properties and, by separating the particles, increases their free surfaces exposed to contact with CO₂ thus favouring the lime carbonation process [9]. The disagglomeration of the aggregates of nanoparticles further fosters to overcome the limitations typical of the lime-based treatments, as the disagglomerated particles succeed in penetrating more deeply inside the porosities of the treated material. However, the just described synthesis procedure has some advantages: long synthesis times, low specific production and difficulty in extending the process at industrial scale level.

VALERIA DANIELE ET AL "Synthetis of CA(OH)2 nanoparticles with the addition of Triton X-100. Protective treatments on natural stones: preliminary results" Journal of Culture Heritage Vol. 13, No. 1, 1 January 2012 , pages 40-46, XP055062000 discloses the process for the synthesis of calcium hydroxide nanoparticles, having the medium size of 50 nm by precipitation of calcium chloride with sodium hydroxide in the presence of a surfactant. The present invention differs in that the hydroxide particles are obtained by ion exchange technique.

GB 1017341A (LAPORTE CHEMICAL) 19 January 1966 relates to a process for the production of water soluble barium compounds of high purity, from barium/sulphide, particularly the aqueous solutions of barium sulphide obtained by the water extraction of the clinker resulting from the coke like reduction of barytes.

Now it has surprisingly found that a production process based upon the use of ionic exchange resins overcomes the limitations of the methods of state of art, by allowing to obtain Ca(OH)2 nanoparticles with sizes smaller than 100nm and without any washing of Ca(OH)₂ suspension. The proposed process further works at room temperature, it allows obtaining a suspension without NaCl, it is characterized by a high yield, very short production times (the *step* for producing the nanoparticles ends already in the first 5-10 minutes) and by an easy scalability at industrial level. In order to make a comparison between the synthesis times of the proposed technique, it is sufficient thinking that in order to produce 10g of Ca(OH)2 nanoparticles 5-10 minutes are necessary with respect to more than 3 hours of the dropwise technique described above which, additionally, requests the phases related to the washings. The obtained nanoparticles of Ca(OH)₂ were characterized by means of Transmission Electron Microscopy (TEM) and X-ray diffractometry; this last technique, in particular, allows evaluating the reactivity of particles in relation to the carbonation process.

### Background of the invention

Therefore an object of the present invention is the process of claim 1; additional objects are mentioned in the depending claims.

### Brief description of the figures

Two drawings are enclosed to the present description, showing:
**Figure 1****.** TEM micrographies on **W0** samples, obtained with the dropwise method: ***a-b***) particles of Ca(OH)₂ with sizes variable between about 300 and about 600 nm of side
**Figure 2****.** TEM micrographies on **WR2** samples, obtained by using ionic exchange resins: ***a-b)*** single, regularly formed and perfectly hexagonal particles, with side average sizes of about 50nm; ***c)*** group of Ca(OH)₂ nanoparticles (with side average sizes comprised between 80nm and less than 40nm) overlapped in ordered manner and transparent to the incident beam of electrons.

### Detailed description of the invention

The process according to the invention comprises firstly a reaction in aqueous solution of calcium chloride CaCl₂·2H₂O with an anionic resin in OH- form and granulometry comprised between 540 and 640 µm, preferably 590±50 µm. As examples of anionic resins [Dowex Marathon 550 A; Purolite Purofine PFA200, Amberlite™ IRA458] can be mentioned. The reaction is performed under stirring for a time period comprised between 0.5 and 10 minutes by obtaining a suspension containing the precipitate and said resin. Advantageously the ratio between mass of calcium chloride in the reaction and total capacity of used resin is comprised between 0.5 and 3, preferably between 1 and 2, more preferably between 1.3 and 1.7 and the initial concentration of CaCl₂·2H₂O in the solution is comprised between 1 and 30 g/l and preferably between 10 and 20 g/l. The stirring is then interrupted and the resin separation is carried out; advantageously the resin separation takes place by mechanical means, preferably by means of a sieve. A suspension of Ca(OH)₂ nanoparticles is obtained with granulometry comprised between 40 and 80 nm. In an additional embodiment the suspension containing Ca(OH)₂ nanoparticles is additioned with additional resin which can be then recovered. In another embodiment, in the suspension containing Ca(OH)₂ nanoparticles the water is replaced by an alcohol up to 50%, with reference to the suspension volume. Preferably 2-propanol or other alcohols are used.

### Examples

The materials used in the synthesis of Ca(OH)₂ nanoparticles are: calcium chloride dihydrate (CaCl₂·2H₂O) (Merck), strong anionic resin (Dowex Marathon 550 A (OH)), alcohol 2-propanol (Merck), deionized water (purified with Millipore Organex system R ≥ 18 MW cm)).

### Synthesis of the Ca(OH)2 nanoparticles

Hereinafter the procedure is described thereby it is possible obtaining aqueous suspensions of Ca(OH)2 nanoparticles with the proposed method (method A). In particular, first of all the tests performed for evaluating the optimum quantity of resin to be used in the method are shown, by varying the R/C ratio (C: total equivalent mass of chlorides in solution; R: total capacity of the used resin measured in equivalent mass); under optimum quantity the R/C ratio is meant allowing to produce in short times Ca(OH)₂ with a low residual content of chlorides in the final suspension. The content of chlorides in the suspension can be further lowered by putting in contact the suspension obtained with resin in OH- form. In this second process phase additional nanolime is produced and the resin capacity is only partially used. The resin used for this second phase can be then re-used to produce nanolime by putting it in contact with solutions of CaCl₂.

By comparison the procedure to obtain Ca(OH)2 nanoparticles in aqueous suspension starting from an aqueous solution of CaCl₂ (T=90°C) by means of adding dropwise an aqueous solution of NaOH (method B) is shown.

Method A). In order to obtain about 3g of Ca(OH)₂, 50g of anionic resin in OH- form are added to 400ml of aqueous solution containing 6.32g of CaCl₂·2H₂O, by working at room temperature and under strong stirring. When the resin s added to the aqueous solution of CaCl₂, a turbid precipitate with white colour (attributable to Ca(OH)2 nanoparticles, as shown subsequently) can be instantaneously observed. In order to monitor the resin exchange speed during time, the system is left under stirring for 24 hours; during the test, collections of samples at established intervals are performed to monitor the quantity of chlorides still present in solution and the produced quantity of Ca(OH)₂. When the stirring is interrupted, the resin tends quickly to deposit on the bottom of the vessel containing the suspension of Ca(OH)₂; the resin is then separated by using a sieve with mesh of 425µm.

The quantity of resin and calcium chloride used in the synthesis were calculated based upon the exchange capability (C) of resin (1.1 eq/l). At first a R/C ratio equal to 1 was used; the aqueous suspension of Ca(OH)₂ nanoparticles obtained with a R/C=1 ratio is called **"WR1** suspension".

By using the same synthesis procedure just described for the R/C=1 ratio, other two syntheses of Ca(OH)₂ nanoparticles were performed by varying the resin quantity, 75g and 90g, corresponding to a R/C ratio equal to 1.5 and 1.8, respectively; the aqueous suspensions of Ca(OH)₂ nanoparticles obtained with R/C=1.5 and R/C=1.8 ratios are called **"WR2** suspension" and **"WR3** suspension", respectively.

From the **WR2** and **WR3** suspensions, already after 5 minutes a production of Ca(OH)₂ is obtained equal to about 90% of the theoretical maximum value, but a residual concentration of chlorides is observed in the order of 300mg/l (see Table 2), to further reduce the content of residual chlorides in solution one proceeds as follows.

The **WR2** suspension, obtained starting from a R/C=1.5 ratio (optimum ratio), with the above-described process, is placed in contact with 75g of anionic resin in OH- form and kept under stirring for 30 minutes (such time interval is necessary to monitor the concentration of the residual chlorides). The suspension is then separated from resin, by using the sieve with 425-µm mesh, and placed in a hermetically closed bottle; the final suspension obtained at the end of the two passages is called **WR2b.**

The resin used in the second passage exchanges a very limited quantity of chlorides and it can be used then for producing nanolime by putting it in contact with 400ml of aqueous solution containing 6.32g of CaCl₂·2H₂O, in order to re-start the production cycle; the suspension obtained at the end of this third passage is called **WR2c.** In order to control that the **WR2c** suspension is equal to the **WR2** one (and then the first and the third passage correspond to a same operating condition), also for the **WR2c** suspension the residual content of chlorides was evaluated at different time intervals. Method B) (comparative method). In order to obtain about 3g of Ca(OH)₂ nanoparticles, 200ml of aqueous solution were prepared containing 8.82g of CaCl₂·2H₂O e 200 ml of aqueous solution containing 4.80g of NaOH. The aqueous solution of Na(OH), used as precipitator, is kept at the room temperature of 25°C, and it is added *dropwise,* at the speed of about 3-4ml/min, to the aqueous solution of CaCl₂·2H₂O kept by means of thermal bath at the temperature of 90°C. At the synthesis end, after about 24 hours necessary to allow the complete sedimentation of the solid phase, an aqueous suspension of Ca(OH)₂, was obtained, with a turbid precipitate with white colour. The precipitate was then subjected to a series of washings in order to remove the sodium chloride (NaCl) which had formed after the synthesis process; by considering the solubility of Ca(OH)₂ in water (1.65 g/l, T=20°C [15]), after washings there is a loss in Ca(OH)₂ equal to about 28%. The obtained final suspension is indicated **W0.**

### Evaluation of the resin exchange kinetics

In order to evaluate the resin exchange speed and therefore the production speed of the nanolimes, once having mixed the resin with the aqueous solution of CaCl₂·2H₂O, collections of solution are performed at different time intervals and the concentration of the chlorides is determined by means of ionic Chromatography (DX-120 Dionex).

### Resin regeneration

The resin can be regenerated by means of a NaOH solution and re-used. In particular, the resin is poured into a buret wherein 1000ml of NaOH solution (1.5M) are fluxed at the flow rate of 20ml/min. At the end of the process the collected NaOH solution is analysed by means of ionic chromatography in order to evaluate the resin regeneration level.

### Characterization of the Ca(OH)2 nanoparticles

In order to analyse the morphology and the size of the obtained particles, the suspensions produced according to the methods A) and B) are characterized by means of the transmission electric microscopy TEM, by depositing 0.2ml of sample on a copper grid.

An important feature of the nanolimes, linked to the granulometry and to the morphology, is the reactivity with the carbon dioxide of air (carbonation). In order to evaluate such reactivity XRD analyses of the nanolimes which had been subjected to a carbonation process in air were performed. The sample is prepared by keeping the nanolime suspension for 20' in ultrasound bath and depositing 0.2ml of suspension on a single silicon crystal. The measurements in order to observe the possible carbonation of the nanoparticles are performed on the sample dried in air (T=20°C, R.H. 40%). Each diffraction spectrum X is processed by means of a software Profile Fit (Philips PROFIT v.1.0) and the crystalline phases are attributed by means of JCPDS cards; the ratio between the area subtended to the peaks of CaCO₃ and the spectrum total area is defined carbonation yield.

The carbonation tests of the Ca(OH)₂ nanoparticles were performed on aqueous suspensions as such and on suspensions wherein the water is partially replaced by 2-propanol: in particular, each suspension is divided into 4 lots. In each lot, different water volumes are removed and replaced by equal volumes of 2-propanol, by obtaining 4 samples with water percentages (W%) of 100%, 75%, 50% and 25% respectively. The carbonation tests were performed by using the **WR2** sample, obtained by using the method A, and **W0** sample, obtained by using the method B. The samples subjected to the carbonation tests are summarized in Table 1.

**Table 1. Alcoholic suspensions of nanolimes with different water %.**

| Synthesis method | Suspension | R/C | W% |
|---|---|---|---|
| **Method A** | **WR2₁₀₀** | 1.5 | 100 |
| | **WR2₇₅** | | 75 |
| | **WR2₅₀** | | 50 |
| | **WR2₂₅** | | 25 |
| **Method B (comparative method)** | **W0₁₀₀** | -- | 100 |
| | **W0₇₅** | | 75 |
| | **W0₅₀** | | 50 |
| | **W0₂₅** | | 25 |

### Results and discussion

Table 2 shows the features of the aqueous suspensions of Ca(OH)₂ nanoparticles obtained according to the shown technique, in the time interval comprised between 0.5 and 5 minutes of exchange with resin. In particular, for each suspension the quantity of used resin, the percentage decrease in chlorides (ΔCl), the residual value of chlorides and the quantity of produced Ca(OH)₂ are shown.

**Table 2. Features of the aqueous suspensions of Ca(OH)₂ nanoparticles produced with the method A between 0.5 and 5 minutes, in relation to the used resin, the residual content of chlorides, and to the quantity of Ca(OH)₂ produced after 5 minutes of exchange.**

| Suspension | Resin quantity (g) | R/C | DCl 0,5' (%) | ΔCl 5' (%) | Residual chlorides after 5' (mg/l) | Ca(OH)₂ produced after 5' (g) |
|---|---|---|---|---|---|---|
| **WR1** | 50 | 1 | -77.2 | -80.7 | 1355 | 2.4 |
| **WR2** | 75 | 1.5 | -91.9 | -95.2 | 335 | 2.8 |
| **WR3** | 90 | 1.8 | -91.2 | -95.8 | 280 | 2.8 |
| **WR2b** | 75 | 1.5 | -99.8 | -99.8 | 12 | 2.9 |

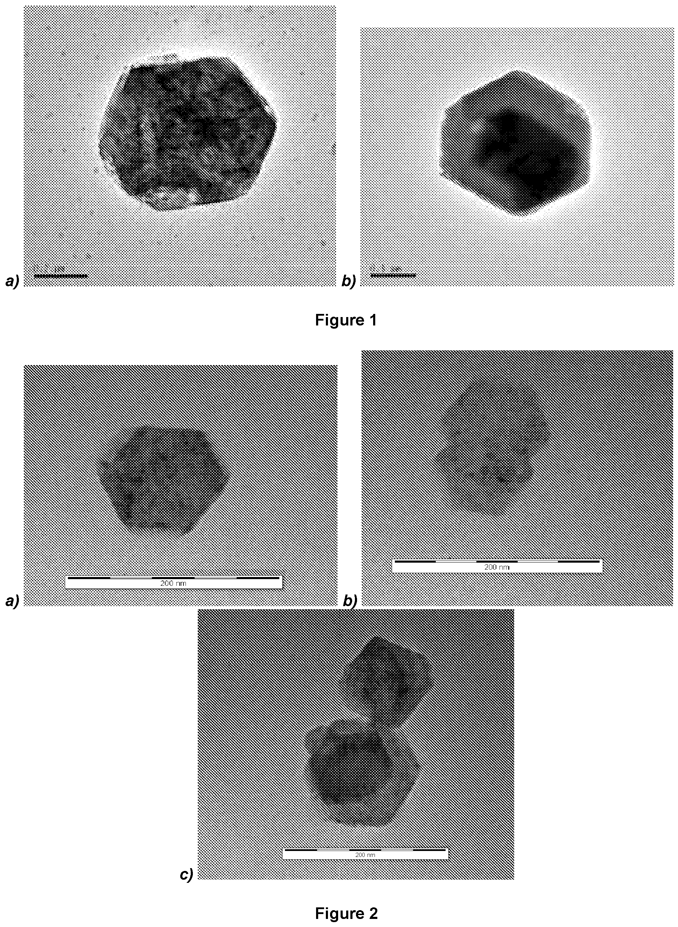

At last, the analysis of chlorides on **WR2c** suspension allowed detecting values analogous to those obtained in case of **WR2** suspension given that it confirms the possibility of making cyclic the "two-step" process]
The TEM micrographies, shown in Fig.1, show hexagonal and regularly formed Ca(OH)₂ nanoparticles synthetized with method B (**W0** sospension); the single nanoparticles have side average sizes comprised between 300 and 600nm [2, 10, 11]. In Figure 2, TEM micrographies related to the **WR2** sample, are shown; in particular, with side average size generally smaller than 50nm are observed. In figures 2a-b) isolated particles are shown: these regularly formed and perfectly hexagonal particles have sizes of about 50nm. In figure 2c) a group of particles with sizes comprised between 80nm and less than 40nm is shown; in particular, it is possible noting that these particles, overlapped in ordered way, are so thin to result transparent to the incident beam of electrons. From the comparison of the micrographies it results then that with the proposed method nanolimes are produced having sizes smaller by about one order of magnitude with respect to the nanolimes produced with the traditional dropwise method.

As far as the carbonation measurements are concerned, performed with the XRD analysis, Table 3 shows the obtained results, by comparing the *yield* values of **WR2** and **W0** samples, with different water percentages.

**Table 3. Values of carbonation yield of nanoparticles in WR2 and W0 samples, upon varying the water percentage in the suspension**

| **Suspension obtained with method A** | ***yield*** | **Suspension obtained with method B (comparative method)** | ***yield*** |
|---|---|---|---|
| **WR2₁₀₀** | 85% | **W0₁₀₀** | 50% |
| **WR2₇₅** | 90% | **W0₇₅** | 80% |
| **WR2₅₀** | 80% | **W0₅₀** | 35% |
| **WR2₂₅** | 10% | **W0₂₅** | 10% |

By comparing the results obtained from the samples synthetized with the method A) and B) or with those which can be found in literature [2, 10, 11], it is possible noting, by using the anionic resin, how significantly higher carbonation values can be reached. The carbonation reaction takes place between the gaseous CO₂ in air and the calcium hydroxide, for example when the nanoparticles according to the invention are used in the treatment of calcareous materials. The carbonation tests, and therefore the reactivity of the produced nanoparticles, were inserted for an indirect control on the sizes of the nanoparticles themselves. Yield values higher than 80% are observed for the nanolimes produced with the proposed method. The 10% value obtained in the samples characterized by a water (W) percentage of 25% is probably correlated to the solvent quick evaporation (only about 20' with respect to about 120' noticed for the other samples) and to the relatively low value of relative humidity (U.R 40%) attenuating the reactivity differences linked to the size of the particles.

The suspensions of nanolime obtained from the process based upon the use of ionic exchange resins, ultimately, show definitely better features than those produced by mixing slowly an aqueous solution of NaOH to one of CaCl₂ in terms of sizes of the particles, morphology and reactivity.

Furthermore, the use of the resin allows producing, in few minutes, the same quantities of nanolime, but reducing considerably the synthesis time, even thanks to the fact that no additional operations are needed to remove reaction products. At last, the possibility of re-generating and re-using the resin for new synthesis processes guarantees to optimize the process and a simple scale-up of the plant for the production of nanometric Ca(OH)₂ with reduced costs.

### Application fields

The synthetized nanolime can be used in the field of the restoration and preservation of the Cultural Goods, (frescos, fillers, wall paintings, architectural surfaces), as well as in the deacidification of paper and wood, as shown in the mentioned literature. In particular, the possibility of producing greater quantities of lime nanoparticles could allow broadening the application fields of such system for producing innovative cements, produced by mixtures of nanolime with silica fume; first results have been recently proposed [16].

The nanolime could be further constitute the raw material for producing nano-calcium carbonates starting only from solutions of calcium chloride instead of from natural limestone. Upon considering the traditional process for producing calcium carbonate, comprising the following operations:
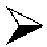 Finding raw materials and elimination of impurities
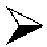 Calcination at 1010°C of calcium carbonate, with consequent formation of calcium oxide (CaO) and carbon dioxide (CO₂)

   CaCO₃ + Heat → CaO + CO₂ ↑
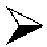 Addition of water to form hydrated lime

   CaO + H₂O → Ca(OH)₂
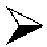 interaction between formed hydrated lime and captured CO₂, with consequent formation of calcium carbonate under the form of nanometric particles

   Ca(OH)₂ + CO₂ → CaCO₃ ↓ + H₂O

   the use of nanolime as raw material for the formation of calcium carbonate determines an energy saving and a reduction in emissions of CO₂.

The Ca(OH)₂ nanoparticles obtained from the invention process result with considerably smaller sizes with respect to those produced with the dropwise process starting from aqueous solutions (in fact, one passes from particles with side average sizes in the order of 300-600nm, to particles with side average sizes variable between 80 and 40nm). Furthermore, the nanolimes produced with the proposed method have so thin thicknesses to result transparent to the incident beam of electrons. The reduced sizes involve a greater reactivity both in relation to the carbonation process and to the interaction with other possible compounds. Use of nanolimes. The synthetized lime can be used in the field of the preservation of the Cultural Goods, in particular in the restoration of frescos, fillers, wall paintings or the protection and surface consolidation of the tombstone materials of architectural interest; the use of Ca(OH)₂ nanoparticles can interest fields such as deacidification of paper and wood, as shown in the mentioned literature. Furthermore, the possibility of producing greater quantities of nanolime could allow broadening the application fields of such system for producing innovative cements, produced by mixtures of nanolime with silica fume. The nanolime, at last, could constitute the raw material for the production of nano-calcium carbonates, starting only from solutions of calcium chloride instead of natural limestone.

### Advantages connected to the invention

With the process of the present invention a considerable reduction in the synthesis time is obtained, it is possible working at room temperature, there is an increase in the specific yield, an easy scalability at the level of the industrial production is possible. The obtained nanoparticles are crystalline, regularly formed, hexagonal and with fine and homogeneous granulometry. Additional advantages are linked to the simplification in the process for separating and recovering the nanolimes with consequent additional cost reduction.

### References

[1] L. Dei, B. Salvadori, Nanotechnology in cultural heritage conservation: nanometric slaked lime saves architectonic and artistic surfaces from decay, Journal of cultural heritage 7 (2006), pp. 110-115.
[2] V. Daniele, G. Taglieri, R. Quaresima, The nanolimes in Cultural Heritage conservation: characterisation and analysis of the carbonatation process, Journal of Cultural Heritage 9 (2008), pp. 294-301.
[3] C. Arcolao, Trattamento all'acqua di calce, In: Tecniche di restauro architettonico, tomo II, P.B. Torsello, UTET, Torino, 1996, 698-699.
[4] M.G. Vinardi, M.H. Cully, A. Brunetto, La reversibilità nel restauro. Riflessioni, esperienze, percorsi di ricerca, In: XI National Congress Scienza e Beni Culturali: "La Pulitura delle Superfici dell'Architettura", Bressanone, 1-4 Luglio, XIX, 2003, pp. 399-405.
[5] P. Sten, Lime Water Consolidation, ICCROM, 1981, 53-61.
[6] J. Pianski, K. Brümmer, G. Ziegenbalg, Nano-particles for stone conservation-state of the art, characteristics and recent developments, In: Stonecore - "Recent progress in the consolidation of calcareous materials"; Litomy 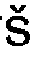 l, Czech Republic, 21-22 Aprile 2010.
[7] P. López-Arce, L. Gómez, L. Pinho, ME. Fernández-Valle, M. Álvarez de Buergo, R. Fort, Influence of porosity and relative humidity in the consolidation of dolostone with calcium hydroxide nanoparticles: assessment of consolidation effectiveness with non destructive techniques, Materials Characterization, 61 (2010), pp. 168-184.
[8] P. Baglioni, R. Giorgi, Soft and hard nanomaterials for restoration and conservation of cultural heritage, Soft Matter, 2 (2006), pp. 293-303.
[9] Z. Slí 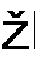 ková, M. Drdácký, C. Moreau, D. Frankeová, L. Nosál, Consolidation of porous limestone with suspensions of calcium hydroxide nano-particles in alcohols, In: Stonecore - "Recent progress in the consolidation of calcareous materials"; Litomy 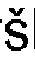 l, Czech Republic, 21-22 Aprile 2010.
[10] V. Daniele, G. Taglieri, Nanolime suspensions applied on natural lithotypes: The influence of concentration and residual water content on carbonatation process and on treatment effectiveness, Journal of cultural heritage 11 (2010), pp. 102-106.
[11] G. Taglieri, V. Daniele, R. Quaresima, R. Volpe, Influence of the Nanolime Suspension Concentration on the Effectiveness of Stone Conservative Treatments, Special Topics on Materials Science and Technology: An Italian Panorama, D. Acierno, D. Caputo, R. Cioffi, A. D'Amore Eds., Brill Publisher, Leiden - Boston 2009, ISBN 978-90-04-17224-1, 359-365.
[12] M. Ambrosi, L. Dei, R. Giorgi, C. Neto, P. Baglioni, Colloidal Particles of Ca(OH)2: Properties and Applications to Restoration of Frescoes, Langmuir 17 (2001), pp. 4251-4255.
[13] B. Salvadori, L. Dei, Synthesis of Ca(OH)2 Nanoparticles from Diols, Langmuir 17 (2001)2371-2374.
[14] E. Hansen, E. Doehne, J. Fidler, J. Larson, B. Martin, M. Matteini, et al., A review of selected inorganic consolidants and protective treatments for porous calcareous materials, Rev Conserv. 4 (2003), pp. 13-25.
[15] R.H. Perry, D.W. Green, Perry's Chemical Engineers' Handbook, Mc Graw Hill, New York (1998), pag. 2-122.
[16] V. Daniele, G. Taglieri, A. Gregori, R. Volpe, New nano-cementing materials, Proc. of XVIII International Workshop "The New Boundaries of Structural Concrete" ACI Italy Chapter, Ancona, Italy, September 15-16, 2011

## Claims

1. A process for the production of Ca(OH)₂ nanoparticles comprising the following operations:
a. reaction in aqueous solution of calcium chloride CaCl₂·2H₂O with an anionic resin in OH- form and granulometry comprised between 540 and 640 µm under stirring for a time period comprised between 0.5 and 10 minutes thereby obtaining a precipitate and a solution containing said resin;
b. interruption of stirring, separation of the precipitated resin after interruption of stirring and obtaining a suspension of Ca(OH)₂ nanoparticles with granulometry comprised between 40 and 80 nm.

2. The process according to claim 1, wherein the ratio between mass of calcium chloride in the reaction and total capacity of the used resin is comprised between 0.5 and 3, preferably between 1 and 2, more preferably between 1.3 and 1.7.

3. The process according to claim 1 or 2, wherein in said reaction the initial concentration of the solution I of CaCl₂·2H₂O is comprised between 1 to 30 g/l and preferably between 10 and 20 g/l.

4. The process according to at least one of the claims 1 to 3, wherein in said operation b) said separation takes place by mechanical way.

5. The process according to at least one of the claims 1 to 4, wherein additional resin is added to said suspension of said operation b).

6. The process according to at least one of the claims 1 to 5, wherein in said operation b) in said suspension the water is replaced up to 50% by an alcohol, said percentage being referred to the total volume of the suspension.

## Patentansprüche

1. Verfahren zur Herstellung von Ca(OH)₂-Nanopartikeln, welches die folgenden Arbeitsgänge aufweist:
a. Reaktion von Kalziumchlorid CaCl₂·2H₂O in wässriger Lösung mit einem anionischen Harz in OH-Form und einer Granulometrie, die zwischen 540 und 640 µm liegt, unter Rühren für eine Zeitdauer, die zwischen 0,5 und 10 Minuten liegt, wodurch man eine Ausfällung und eine Lösung, mit dem Harz erhält;
b. Unterbrechen des Rührens, Trennen des ausgefällten Harzes nach dem Unterbrechen des Rührens und Erhalten einer Suspension von Ca(OH)₂-Nanopartikeln mit einer Granulometrie zwischen 40 und 80 nm.

2. Verfahren nach Anspruch 1, wobei das Verhältnis zwischen der Masse an Kalziumchlorid in der Reaktion und der Gesamtkapazität des verwendeten Harzes zwischen 0,5 und 3, bevorzugt zwischen 1 und 2 und bevorzugter zwischen 1,3 und 1,7 liegt.

3. Verfahren nach Anspruch 1 oder 2, wobei in der Reaktion die anfängliche Konzentration der Lösung I von CaCl₂·2H₂O zwischen 1 und 30 g/l und vorzugsweise zwischen 10 und 20 g/l liegt.

4. Verfahren nach wenigstens einem der Ansprüche 1 bis 3, wobei in dem Arbeitsgang b) die Trennung auf mechanischem Weg stattfindet.

5. Verfahren nach wenigstens einem der Ansprüche 1 bis 4, wobei zusätzliches Harz zu der Suspension des Arbeitsganges b) hinzugefügt wird.

6. Verfahren nach wenigstens einem der Ansprüche 1 bis 5, wobei in dem Arbeitsgang b) in der Suspension das Wasser bis zu 50 % durch einen Alkohol ersetzt wird, wobei der Prozentsatz auf das Gesamtvolumen der Suspension bezogen ist.

## Revendications

1. Procédé de production de nanoparticules de Ca(OH)₂ comprenant les opérations suivantes :
a. réaction en solution aqueuse de chlorure de calcium CaCl₂.2H₂O avec une résine anionique sous la forme OH- et ayant une granulométrie comprise entre 540 et 640 µm sous agitation pendant une durée comprise entre 0,5 et 10 minutes pour obtenir ainsi un précipité et une solution contenant ladite résine ;
b. arrêt de l'agitation, séparation de la résine ayant précipité après l'arrêt de l'agitation et obtention d'une suspension de nanoparticules de Ca(OH)₂ ayant une granulométrie comprise entre 40 et 80 nm.

2. Procédé selon la revendication 1, dans lequel le rapport entre le poids de chlorure de calcium dans la réaction et la capacité totale de la résine utilisée est compris entre 0,5 et 3, de préférence entre 1 et 2, plus préférablement entre 1,3 et 1,7.

3. Procédé selon la revendication 1 ou 2, dans lequel dans ladite réaction la concentration initiale de la solution I de CaCl₂.2H₂O est comprise entre 1 et 30 g/l et de préférence entre 10 et 20 g/l.

4. Procédé selon au moins l'une des revendications 1 à 3, dans lequel dans ladite opération b) ladite séparation est effectuée par un moyen mécanique.

5. Procédé selon au moins l'une des revendications 1 à 4, dans lequel une quantité de résine supplémentaire est ajoutée à ladite suspension de ladite opération b).

6. Procédé selon au moins l'une des revendications 1 à 5, dans lequel dans ladite opération b), dans ladite suspension, l'eau est remplacée jusqu'à 50 % par un alcool, ledit pourcentage se référant au volume total de la suspension.
